# EUROPEAN PATENT APPLICATION

(11) **EP 4 667 391 A1**
(43) Date of publication of application: **24.12.2025**
(21) Application number: 25177182.0
(22) Date of filing: 19.05.2025
(51) Int. Cl.: B65G 17/34, B65G 21/20, B65G 47/66, B65G 47/96

(54) **A TOP COVER FOR A CROSS BELT FRAME OF A CONVEYOR SYSTEM**

(30) Priority: 19.06.2024 CN 202410796393
(71) Applicant: Intelligrated Headquarters LLC, Mason, OH 45040 (US)
(72) Inventor: DONGDONG, Wang, Charlotte, 28202 (US); MIAO, Yingbin, Charlotte, 28202 (US); QU, Tiecheng, Charlotte, 28202 (US); LI, Yun, Charlotte, 28202 (US); QIU, Yusheng, Charlotte, 28202 (US); HUANG, Minjie, Charlotte, 28202 (US)
(74) Representative: Haseltine Lake Kempner LLP

(57) **Abstract**

A top cover for a cross belt frame is disclosed. The top cover defining a longitudinal direction, a transverse direction, and a vertical direction. The top cover comprising a main body extending along a plane defined by the longitudinal direction and the transverse direction. The main body having a middle portion positioned between two end portions. A middle locking unit extending from a bottom side of the middle portion of the main body, is configured to engage with a pair of slide rails of the cross belt frame. A first end locking unit extending from one of the two end portions, is configured to detachably engage with at least one protrusion that extends from the cross belt frame and a second end locking unit extending from another one of the two end portions, is configured to detachably engage with other protrusion that extends from the cross belt frame.

## Description

### TECHNOLOGICAL FIELD

Example embodiments of the present disclosure relate generally to a conveyor system, and more particularly relates to a top cover for a cross belt frame of a conveyor system.

### BACKGROUND

Conveyor systems or sorter systems are used for transporting and managing multiple goods in an automated procedure. The sorter systems are automated systems used in handling the multiple goods and sorting applications, at one or more locations such as distribution centers, postal sorting facilities, airports, and other logistics environment. The sorter systems often utilize a loop sorter, which is a continuous loop of a plurality of conveyor belts that are arranged side-by-side. When an item that is placed on the loop sorter reaches its sorting location, the conveyor belt that the item is on transfers product into a chute. The conveyor belts when assembled in the loop sorter each have a gap between adjacent conveyor belts. It is often desirable to cover the gap with a top cover. Existing top covers of loop sorters often include sheet metal and require screws, buckles, and/or welding to assemble to the loop sorter. The buckles and screws often break and result in the top cover being difficult to assemble to the loop sorter. Also, the welding process may add cost to the assembly of the loop sorter.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a top cover for a cross belt frame is disclosed. The top cover defines a longitudinal direction, a transverse direction, and a vertical direction. Further, the top cover comprises a main body extending along a plane defined by the longitudinal direction and the transverse direction, the main body having a middle portion and two end portions. The middle portion is positioned between the two end portions. Further, the top cover comprises a middle locking unit extending from a bottom side of the middle portion of the main body. Further, the top cover comprises a first end locking unit extending from one of the two end portions and a second end locking unit extending from another one of the two end portions. Further, the middle locking unit is configured to detachably engage with a pair of slide rails of the cross belt frame. Further, the first end locking unit is configured to detachably engage with at least one protrusion that extends from the cross belt frame and the second end locking unit is configured to detachably engage with at least one other protrusion that extends from the cross belt frame.

In some embodiments, the middle locking unit corresponds to a pair of channels and the first end locking unit and the second end locking unit correspond to a hook. In some embodiments, the hook extends from a bottom side of the top cover and towards the middle portion of the main body.

In some embodiments, the pair of channels are configured to slide along the pair of slide rails of the cross belt frame to interlock the middle portion of the main body of the top cover with the cross belt frame. In some embodiments, the pair of channels are configured to restrict movement of the top cover in the transverse direction and the vertical direction when interlocked with the pair of slide rails.

In some embodiments, the hook is configured to anchor around the at least one protrusion that extends from the cross belt frame to interlock the first end of the top cover with the cross belt frame.

In some embodiments, the first end locking unit and the second end locking unit are configured to restrict movement of the top cover in the longitudinal direction and the vertical direction when interlocked with the respective at least one protrusion.

In some embodiments, the middle locking unit corresponds to a pair of channels. Each channel has a vertically-extending portion and a transverse-extending portion that enable the pair of channels to slide along the pair of slide rails in the vertical direction.

In some embodiments, each of the two end portions are constructed to bend at an angle to enable the respective end locking unit to anchor around the respective protrusion that extend from the cross belt frame. In some embodiments, the angle defines a range between 30 degrees to 75 degrees.

In some embodiments, the top cover is made from polyvinyl chloride (PVC) and the top cover is manufactured with an extrusion process.

In another example embodiment, a method is disclosed. The method comprising bending two end portions of a main body of a top cover. Further the top cover defines a longitudinal direction, a transverse direction, and a vertical direction, and the top cover comprises a main body extending along a plane defined by the longitudinal direction and the transverse direction, the main body having a middle portion and two end portions. Further, the middle portion is positioned between the two end portions, a middle locking unit extending from a bottom side of the middle portion of the main body, a first end locking unit extending from one of the two end portions, and a second end locking unit extending from another one of the two end portions. Further, the method comprises sliding the middle locking unit along a pair of slide rails of a cross belt frame. Further, the method comprises detachably engaging the first end locking unit with at least one protrusion that extends from the cross belt frame. Thereafter, the method comprises detachably engaging the second end locking unit with at least one other protrusion that extends from the cross belt frame..

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates an isometric view of a top cover with a cross belt frame in accordance with an example embodiment of the present disclosure;
FIG. 2A illustrates a side view of the top cover in accordance with an example embodiment of the present disclosure;
FIG. 2B illustrates a top view of the top cover in accordance with an example embodiment of the present disclosure;
FIG. 3A illustrates a front sectional view of the top cover in accordance with an example embodiment of the present disclosure;
FIG. 3B illustrates a user sliding the top cover over the cross belt frame in accordance with an example embodiment of the present disclosure;
FIG. 3C illustrates the user bending two end portions of the top cover to install the top cover with the cross belt frame in accordance with an example embodiment of the present disclosure;
FIG. 4A illustrates the middle locking unit detachably engaged with a pair of slide rails of the cross belt frame in accordance with an example embodiment of the present disclosure;
FIG. 4B illustrates a first end locking unit prior to being detachably engaged with at least one protrusion of the cross belt frame in accordance with an example embodiment of the present disclosure; and
FIG. 4C illustrates the top cover mounted over the cross belt frame in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a top cover for a cross belt frame. Embodiments may be configured to define a longitudinal direction, a transverse direction, and a vertical direction. Embodiments may comprise a main body extending along a plane that may be defined by the longitudinal direction and the transverse direction. Embodiments may have a middle portion and two end portions. Embodiments may be positioned between the two end portions. Embodiments may comprise a middle locking unit extending from a bottom side of the middle portion of the main body. Embodiments may comprise a first end locking unit extending from one of the two end portions. Embodiments may comprise a second end locking unit extending from another one of the two end portions. Embodiments may be configured to detachably engage the middle locking unit with a pair of slide rails of the cross belt frame. Embodiments may be configured to detachably engage the first end locking unit with at least one protrusion that extends from the cross belt frame. Embodiments may be configured to detachably engage the second end locking unit with at least one other protrusion that extends from the cross belt frame.

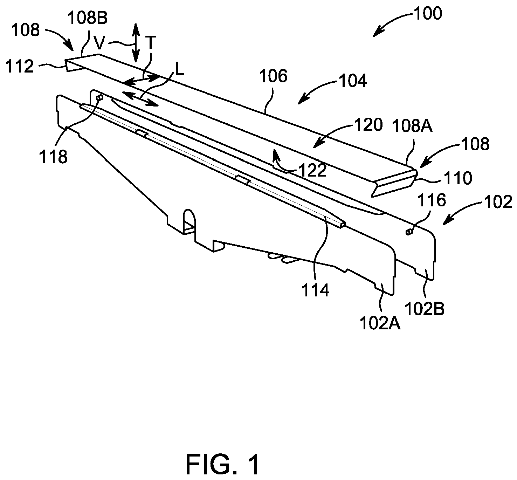

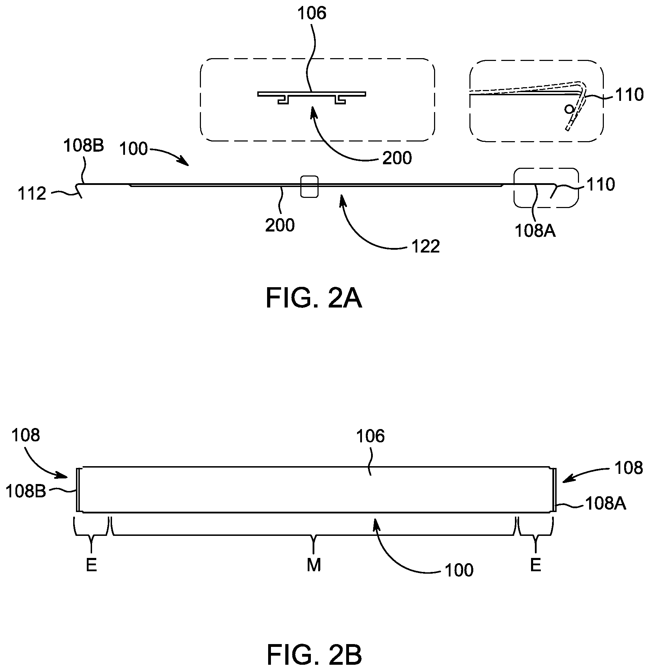

FIG. 1 illustrates an isometric view a top cover 100 with a cross belt frame 102, in accordance with an example embodiment of the present disclosure. In some embodiments, the top cover 100 may comprise a main body 104 having a middle portion 106 and two end portions 108. Further, the top cover 100 may comprise a middle locking unit 200 (FIG. 2A), a first end locking unit 110, and a second end locking unit 112.

In some embodiments, the top cover 100 may be configured to be engaged with the cross belt frame 102. Further, the cross belt frame 102 may be installed with the conveyor belt. In one example, the conveyor belt may correspond to a loop sorter conveyor belt. In some embodiments, the conveyor belt may be configured to transport one or more packages and one or more items from a source to a destination within a facility. Further, the facility may correspond to a warehouse, a factory, or a mine. Further, the cross belt frame 102 may comprise a first side 102A and a second side 102B. The first side 102A and the second side 102B of the cross belt frame 102 may be mounted on one side of at least two conveyor belts (i.e., the cross belt frame 102 may be positioned between two conveyor belts and the first side 102A of the cross belt frame 102 may be mounted to a first conveyor belt and the second side 102B may be mounted to a second conveyor belt). In some embodiments, when the at least two conveyor belts may be arranged in a cascade orientation, a gap may be created between the first side 102A and the second side 102B of the cross belt frame 102. Further, the gap created between the first side 102A and the second side 102B of the cross belt frame 102 may be covered by the top cover 100.

In some embodiments, the cross belt frame 102 may be configured to provide support to and guide the conveyor belt during transporting the one or more packages and the one or more items. In some embodiments, the cross belt frame 102 may be crafted with a durable material. Further, the durable material may comprise at least one of a steel, aluminum, or iron. Further, the cross belt frame 102 may comprise one or more horizontal plates and one or more vertical plates. Further, the cross belt frame 102 may be configured to serve as a frame to support at least one motorized roller or one or more pulleys associated with each of the conveyor belts. In some embodiments, the cross belt frame 102 may define a length of 1 meter.

In some embodiments, the top cover 100 may be configured to define a longitudinal direction L, a transverse direction T, and a vertical direction V. Further, the top cover 100 may be composed of a flexible material. Further, the flexible material may include, but is not limited to, a plastic or a metal, such as a reinforced metal. Further, the top cover 100 may define one or more dimensions. Further, the one or more dimensions may comprise a length of 0.91 meters, a width of 80 mm, and a thickness of 2 mm. In some embodiments, the length of 0.91 meters of the top cover 100 may be similar to the length of 1 meter of the cross belt frame 102 to ensure a proper fitting of the top cover 100 over the gap. In some embodiments, the length of 0.91 meters of the top cover 100 may be measured in the longitudinal direction L of the top cover 100. In some embodiments, the width of 80 mm of the top cover 100 may be measured in the transverse direction T of the top cover 100. In some embodiments, the thickness of 2 mm of the top cover 100 may be measured in the vertical direction V of the top cover 100.

In some embodiments, the top cover 100 may further comprise the main body 104. Further, the main body 104 may be configured to extend along a plane defined by the longitudinal direction L and the transverse direction T of the top cover 100. In some embodiments, the plane defined by the longitudinal direction L may correspond to an X-axis plane. In some embodiments, the main body 104 may be positioned by a user in proximity to the gap between the first side 102A and the second side 102B of the cross belt frame 102. In one example, the main body 104 may comprise a first end 108A and a second end 108B. In one example, the first end 108A of the main body 104 may be manually aligned between the first side 102A and the second side 102B of the cross belt frame 102.

In some embodiments, the main body 104 may further comprise the middle portion 106 and the two end portions 108. Further, the middle portion 106 may be positioned between the two end portions 108. Further, one end portion from the two end portions 108 of the main body 104 may correspond to the first end 108A of the main body 104. Further, other end portion from the two end portions 108 of the main body 104 may correspond to the second end 108B of the main body 104. In some embodiments, the middle portion 106 and the two end portions 108 may be configured to define the total length of the top cover 100. In some embodiments, the middle portion 106 of the main body 104 may further comprise a top side 120 and a bottom side 122.

In some embodiments, the top cover 100 may further comprise the middle locking unit 200. Further, the middle locking unit 200 may be extended from the bottom side 122 of the middle portion 106 of the main body 104. Further, the middle locking unit 200 may correspond to a pair of channels. Further, the middle locking unit 200 may be configured to detachably engage with the cross belt frame 102. In some embodiments, the cross belt frame 102 may further comprise a pair of slide rails 114. In some embodiments, the pair of slide rails 114 may be configured to detachably engage with the middle locking unit 200. In some embodiments, at least one of the pair of slide rails 114 may be installed at the first side 102A the cross belt frame 102 and other one of the pair of slide rails 114 may be installed at the second side 102B of the cross belt frame 102.

In some embodiments, the top cover 100 may further comprise the first end locking unit 110. Further, the first end locking unit 110 may be configured to detachably engage with the cross belt frame 102. In some embodiments, the top cover 100 may further comprise the second end locking unit 112. The second end locking unit 112 may be configured to detachably engage with the cross belt frame 102. In some embodiments, the cross belt frame 102 further comprises at least one protrusion 116. Further, the at least one protrusion 116 may be configured to extend from the cross belt frame 102. Further, the first end locking unit 110 may be configured to detachably engage with the at least one protrusion 116.

In some embodiments, the top cover 100 may further comprise the second end locking unit 112. Further, the second end locking unit 112 may be configured to detachably engage with the cross belt frame 102. In some embodiments, the cross belt frame 102 may further comprise at least one other protrusion 118. Further, the at least one other protrusion 118 may be configured to extend from the cross belt frame 102. Further, the second end locking unit 112 may be configured to detachably engage with the at least one other protrusion 118 to secure the top cover 100 with the cross belt frame 102.

FIG. 2A illustrates a side view of the top cover 100 in accordance with an example embodiment of the present disclosure. FIG. 2B illustrates a top view of the top cover 100, in accordance with an example embodiment of the present disclosure.

In some embodiments, the main body 104 may comprise the middle portion 106 and the two end portions 108. Further, the middle portion 106 may be configured to detachably engage with the pair of slide rails 114 of the cross belt frame 102. Further, the middle portion 106 may comprise the middle locking unit 200. Further, the middle locking unit 200 may be configured to detachably engage the middle portion 106 with the pair of slide rails 114 of the cross belt frame 102. Further, the middle locking unit 200 may correspond to the pair of channels. In some embodiments, the pair of channels may be crafted with a shape such as, but is not limited to, a L-shape or an inverted L-shape. Further, each of the pair of channels may be crafted with a material such as, but is not limited to, aluminum, steel, or iron. Further, the pair of channels may be configured to cover a total length of the middle portion 106 of the main body 104 of the top cover 100.

In some embodiments, the two end portions 108 may be configured to detachably engage with a front end and a rear end of the cross belt frame 102. Further, as discussed earlier, one end portion from the two end portions 108 of the main body 104 may correspond to the first end 108A of the main body 104. Further, other end portion from the two end portions 108 of the main body 104 may correspond to the second end 108B of the main body 104. In some embodiments, the first end 108A may be constructed with the first end locking unit 110. Further, the second end 108B may be constructed with the second end locking unit 112.

In some embodiments, the first end locking unit 110 and the second end locking unit 112 may correspond to a hook (as illustrated in FIG. 2A). Further, the hook may be crafted in a view such that the hook may extend from the bottom side 122 of the top cover 100 and may bend at a predefined angle towards the middle portion 106 of the main body 104. In one example, the hook of the first end 108A from the two end portions 108 may be configured to bend at an angle of 75 degrees towards the middle portion 106 of the main body 104. In another example, the hook of the second end 108B from the two end portions 108 may be configured to bend at the angle of 75 degrees, towards the middle portion 106 of the main body 104.

As illustrated in FIG. 2B, the main body 104 of the top cover 100 may comprise the middle portion 106. The middle portion 106 may be represented by "M". Further, the main body 104 may comprise the two end portions 108. Further, the two end portions 108 may be represented by "E". In some embodiments, the length of 0.91 meters of the top cover 100 may be a sum of a length of the middle portion 106 and the two end portions 108.

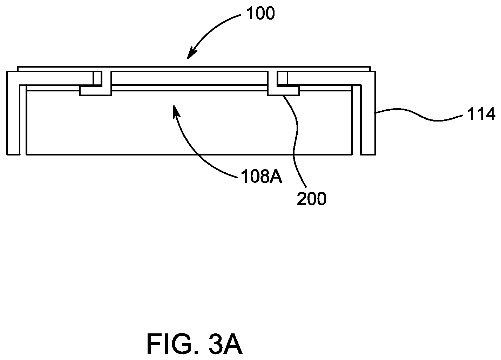

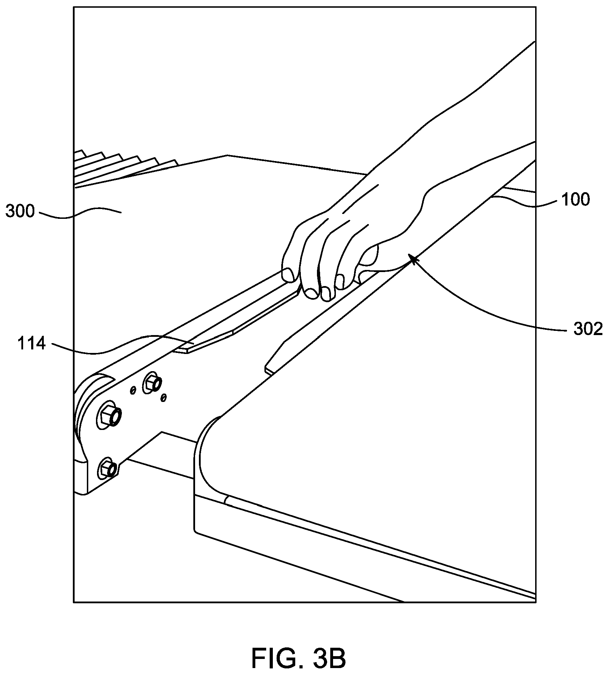

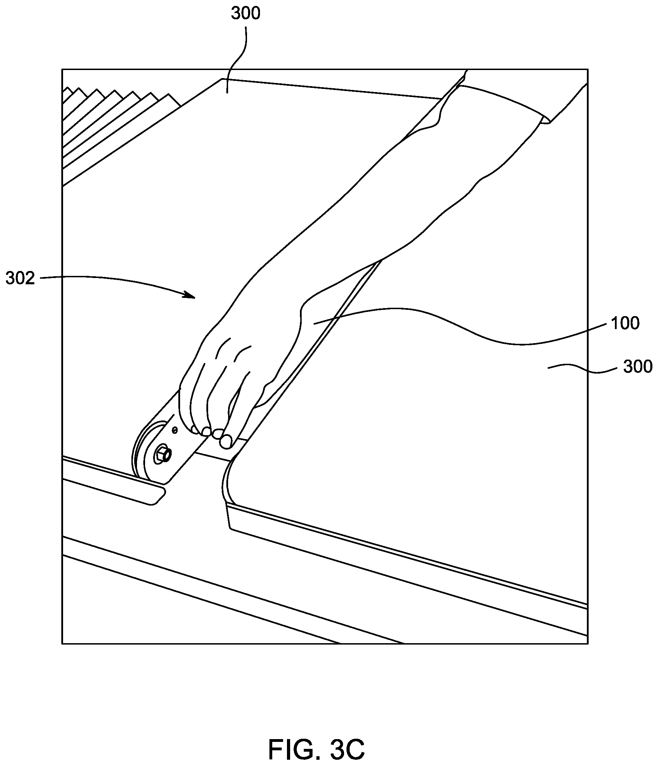

FIG. 3A illustrates a front sectional view of the top cover 100, in accordance with an example embodiment of the present disclosure. FIG. 3B illustrates a user sliding the top cover 100 over the cross belt frame 102, in accordance with an example embodiment of the present disclosure. FIG. 3C illustrates the user bending the two end portions 108 of the top cover 100 to install the top cover 100 with the cross belt frame 102, in accordance with an example embodiment of the present disclosure.

In some embodiments, the middle locking unit 200 may extend from the bottom side 122 of the middle portion 106 of the main body 104. Further, the middle locking unit 200 may correspond to the pair of channels. Further, the pair of channels may be configured to slide along the pair of slide rails 114 of the cross belt frame 102. In some embodiments, the pair of channels may be configured to cause an interlocking of the middle portion 106 of the main body 104 of the top cover 100 with the cross belt frame 102 of a conveyor belt 300. Further, the pair of channels may have a predefined length. In one example, the length of the pair of channels may be similar to a length of the pair of slide rails 114 of the cross belt frame 102 to ensure proper fitting of the middle locking unit 200 with the pair of slide rails 114.

In some embodiments, the top cover 100 may be installed with the cross belt frame 102 by sliding the top cover 100 along the pair of slide rails 114. Firstly, to install the top cover 100 with the cross belt frame 102, the first end 108A of the top cover 100 may be pulled by a user 302 by an external force in an upward direction (as illustrated in FIG. 3B). The first end 108A of the top cover 100 may be pulled to ensure that the first end 108A of the top cover 100 does not intrude with the pair of slide rails 114 of the cross belt frame 102. Further, the top cover 100 may be composed of the flexible material that may allow the user to pull the first end 108A of the top cover 100. Further, the flexible material may correspond to a polyvinyl chloride (PVC). Further, upon pulling the first end 108A, the middle locking unit 200 of the top cover 100 may be aligned with the pair of slide rails 114 of the cross belt frame 102

Further, the middle locking unit 200 (i.e., the pair of channels) may be engaged with the pair of slide rails 114 by sliding the middle locking unit 200 along the pair of slide rails 114 of the cross belt frame 102. Further, the first end 108A may be pulled by the user 302 and/or the second end 108B may be pushed by the user 302 until the first end 108A of the top cover 100 reaches the front end of the cross belt frame 102. Thereafter, the first end 108A of the top cover 100 may be released by the user 302 upon sliding of the pair of channels ailing the pair of slide rails 114 of the cross belt frame 102. Further, the pair of channels may be configured to interlock with the pair of slide rails 114 of the cross belt frame 102, upon sliding along the total length of the pair of slide rails 114 (as illustrated in FIG. 3C). Further, when the second end 108B of the top cover 100 reaches proximity to the at least one other protrusion 118, the user 302 may pull the second end 108B of the top cover 100 and align over the at least one other protrusion 118 to detachably engage the second end 108B of the top cover 100 with the at least one other protrusion 118.

In some embodiments, the pair of channels may be configured to restrict movement of the top cover 100 in the transverse direction T. Further, the transverse direction T may correspond to a lateral direction. Further, the pair of channels may be configured to restrict movement of the top cover 100 in the vertical direction V when interlocked with the pair of slide rails 114. Further, the vertical direction V may correspond to an upward direction and a downward direction.

In some embodiments, each channel from the pair of channels may comprise a vertically-extending portion and a transverse-extending portion (as illustrated in FIG. 3A). In one example, the vertically-extending portion and the transverse extending portion may be configured to provide a L-shaped feature and an inverted L-shaped feature to the middle locking unit 200. Further, the vertically-extending portion and the transverse extending portion of each channel from the pair of channels may be configured to form a cavity between the pair of channels and the middle portion 106. Further, the cavity between the pair of channels and the middle portion 106 may enable the interlocking of the pair of channels with the pair of slide rails 114 of the cross belt frame 102.

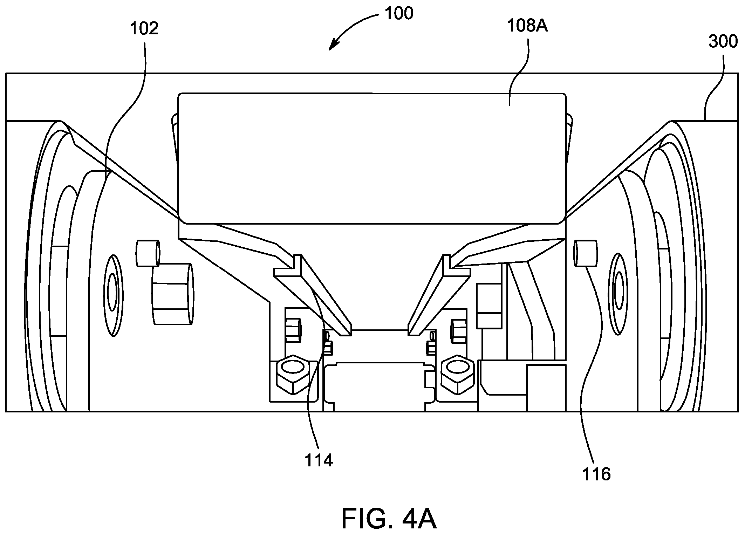

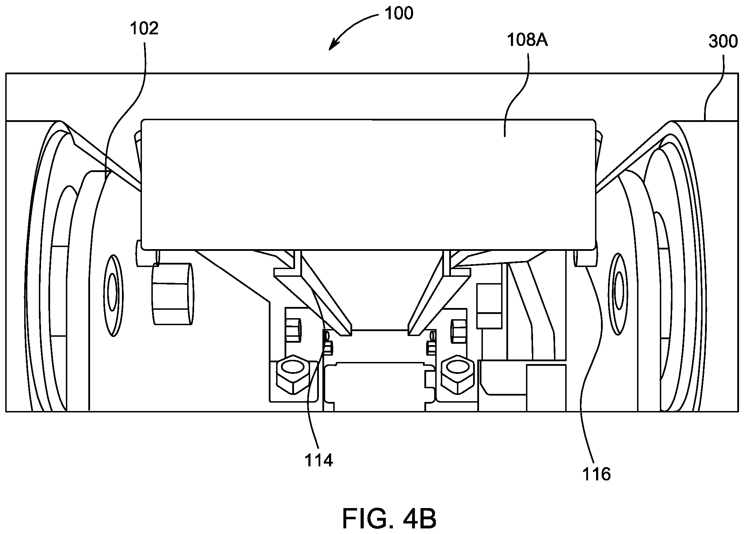

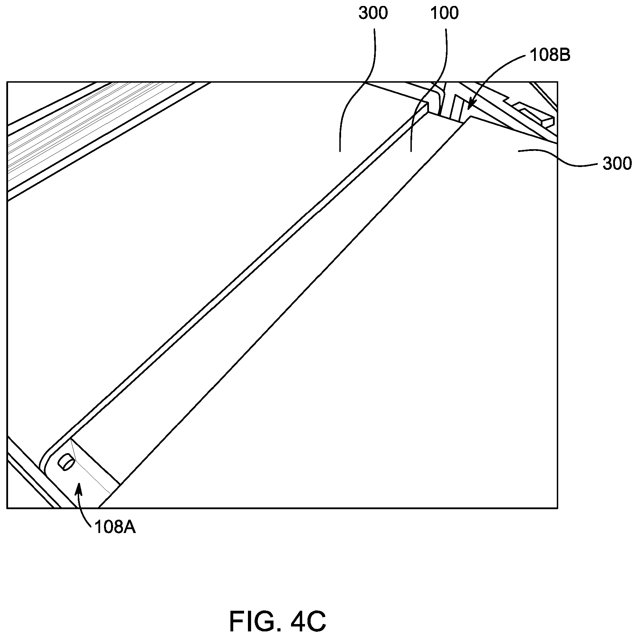

FIG. 4A illustrates the middle locking unit 200 detachably engaged with the pair of slide rails 114 of the cross belt frame 102, in accordance with an example embodiment of the present disclosure. FIG. 4B illustrates the first end locking unit 110 prior to being detachably engaged with the at least one protrusion 116 of the cross belt frame 102, in accordance with an example embodiment of the present disclosure. FIG. 4C illustrates the top cover 100 mounted over the cross belt frame 102, in accordance with an example embodiment of the present disclosure.

In some embodiments, the one end of the cross belt frame 102 may comprise the at least one protrusion 116. Further, the at least one protrusion 116 may correspond to a metallic feature. Further, the metallic feature may comprise at least one of a rivet or a screw. In some embodiments, the at least one protrusion 116 may be configured to extend from the cross belt frame 102. In some embodiments, the at least one protrusion 116 is configured as a rod and may extend completely from the first side 102A to the second side 102B of the cross belt frame 102. In some embodiments, the at least one protrusion 116 may be constructed through one or more processes. Further, the one or more processes may comprise at least one of a molding, casting, or welding. In some embodiments, the at least one protrusion 116 may be composed of a material that may be configured to withstand with a weight of the top cover 100. Further, the material of the at least one protrusion 116 may be selected in such a way that the at least one protrusion 116 may withstand a mechanical stress generated during operations of the conveyor belt 300.

In some embodiments, the first end locking unit 110 may be configured to extend from the first end 108A from the two end portions 108. Further, the first end locking unit 110 may correspond to the hook. Further, the first end locking unit 110 (i.e. the hook) may be configured to anchor around the at least one protrusion 116 upon releasing of the first end 108A after sliding of the pair of channels over the pair of slide rails 114. In some embodiments, the first end locking unit 110 may be configured to interlock the first end 108A with the cross belt frame 102 after anchoring around the at least one protrusion 116. In some embodiments, the first end locking unit 110 may be configured to restrict movement of the first end 108A of the top cover 100 in the longitudinal direction L and the vertical direction V when interlocked with the respective at least one protrusion 116.

In some embodiments, the rear end of the cross belt frame 102 may comprise the at least one other protrusion 118. Further, the at least one other protrusion 118 may correspond to a metallic feature. Further, the metallic feature may comprise at least one of a rivet, a screw, a rod, etc. In some embodiments, the at least one other protrusion 118 may be configured to extend from the cross belt frame 102. In some embodiments, the at least one other protrusion 118 may be constructed through one or more processes. Further, the one or more processes may comprise at least one of a molding, casting, or welding. In some embodiments, the at least one other protrusion 118 may be composed of a material that is configured to withstand with a weight of the top cover 100. Further, the material of the at least one other protrusion 118 may be selected in such a way that the at least one other protrusion 118 may withstand a mechanical stress generated during operations of the conveyor belt 300.

In some embodiments, the second end locking unit 112 may be configured to extend from the second end 108B from the two end portions 108. Further, the second end locking unit 112 may correspond to the hook. Further, the second end locking unit 112 (i.e. the hook) may be configured to anchor around the at least one other protrusion 118 after sliding of the pair of channels over the pair of slide rails 114. In some embodiments, the second end locking unit 112 may be configured to interlock the second end 108B with the cross belt frame 102 after anchoring around the at least one other protrusion 118. In some embodiments, the second end locking unit 112 may be configured to restrict movement of the second end 108B of the top cover 100 in the longitudinal direction L and the vertical direction V when interlocked with the respective at least one other protrusion 118. In some embodiments, the top cover 100 may be configured to detachably engage with the pair of slide rails 114 of the cross belt frame 102 by interlocking of the first end locking unit 110 and the second end locking with the respective at least one protrusion 116 (as illustrated in FIGS. 4B and 4C).

In some embodiments, each of the two end portions 108 may be constructed by bending the top cover 100. In some embodiments, the bend of each of the two end portions 108 may be constructed with an angle that may be configured to enable the respective end locking unit to anchor around the respective protrusion that may be extended from the cross belt frame 102. In some embodiments, the angle of the bend of each of the two end portion 108 may define a range between 30 degrees to 75 degrees.

In some embodiments, a method may be disclosed. At first, the two end portions 108 of the main body 104 of the top cover 100 may be configured to be bend. Further, the top cover 100 may define the longitudinal direction L, the transverse direction T, and the vertical direction V. Further, the top cover 100 may comprise the main body 104 that may be extended along the plane defined by the longitudinal direction L and the transverse direction T. In some embodiments, the main body 104 may have the middle portion 106 and the two end portions 108. Further, the middle portion 106 may be positioned between the two end portions 108. In some embodiments, the middle locking unit 200 may be configured to extend from the bottom side 122 of the middle portion 106 of the main body 104. Further, the first end locking unit 110 may be extending from one of the two end portions 108. Further, the second end locking unit 112 may be extending from another one of the two end portions 108.

For example, a warehouse is installed with a sorter conveyor having a cross belt frame 102. Further, the cross belt frame 102 may be configured to be covered with the top cover 100. Further, the top cover 100 comprises a main body 104 having a middle portion 106 and two end portions 108. Further, the two end portions 108 may comprise the first end locking unit 110 and the second end locking unit 112. Further, the two end portions 108 are configured to be bended by a user by applying an external force.

At second, the middle locking unit 200 may be configured to slide along the pair of slide rails 114 of the cross belt frame 102 to detachably engage . Further, the middle locking unit 200 may correspond to the pair of channels. Further, the pair of channels may be configured to slide along the pair of slide rails 114 of the cross belt frame 102 to interlock the middle portion 106 of the main body 104 of the top cover 100 with the cross belt frame 102. In some embodiments, the pair of channels may be configured to restrict movement of the top cover 100 in the transverse direction T and the vertical direction V when interlocked with the pair of slide rails 114.

For example, the top cover 100 further comprises a middle locking unit 200 that is manually engaged with the pair of slide rails 114 of the cross belt frame 102 to interlock the middle portion 106 of the main body 104 of the top cover 100 with the cross belt frame 102. Further, the middle locking unit 200 corresponds to the pair of channels. Further, the pair of channels slides along the pair of slide rails 114 of the cross belt frame 102 upon application of an external force on the top cover 100 to interlock the middle portion 106 of the main body 104 of the top cover 100 with the cross belt frame 102.

At third, the first end locking unit 110 may be configured to detachably engage with at least one protrusion 116 that extends from the cross belt frame 102. Further, the first end locking unit 110 may correspond to a hook. Further, the hook may be configured to anchor around the at least one protrusion 116 that extends from the cross belt frame 102 to interlock the first end of the top cover 100 with the cross belt frame 102.

For example, the top cover 100 further comprises a first end. Further, the first end of the top cover 100 comprises the first end locking unit 110. Further, the first end locking unit 110 may correspond to a hook. Further, the hook anchors around at least one protrusion 116 that extends from the cross belt frame 102 to interlock the first end of the top cover 100 with the cross belt frame 102.

Thereafter, the second end locking unit 112may be configured to detachably engage with the at least one other protrusion 118 that extends from the cross belt frame 102. Further, the second end locking unit 112 may correspond to a hook. Further, the hook may be configured to anchor around the at least one other protrusion 118 that extends from the cross belt frame 102 to interlock the second end of the top cover 100 with the cross belt frame 102.

For example, the top cover 100 further comprises a second end. Further, the second end of the top cover 100 comprises the second end locking unit 112. Further, the second end locking unit 112 may correspond to a hook. Further, the hook anchors around at least one other protrusion 118 that extends from the cross belt frame 102 to interlock the second end of the top cover 100 with the cross belt frame 102.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. **In** this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A top cover for a cross belt frame, the top cover defining a longitudinal direction, a transverse direction, and a vertical direction, the top cover comprising:
a main body extending along a plane defined by the longitudinal direction and the transverse direction, the main body having a middle portion and two end portions, wherein the middle portion is positioned between the two end portions;
a middle locking unit extending from a bottom side of the middle portion of the main body;
a first end locking unit extending from one of the two end portions; and
a second end locking unit extending from another one of the two end portions, wherein:
the middle locking unit is configured to detachably engage with a pair of slide rails of the cross belt frame,
the first end locking unit is configured to detachably engage with at least one protrusion that extends from the cross belt frame, and
the second end locking unit is configured to detachably engage with at least one other protrusion that extends from the cross belt frame.

2. The top cover of claim 1, wherein the middle locking unit corresponds to a pair of channels and the first end locking unit and the second end locking unit correspond to a hook.

3. The top cover of claim 2, wherein the hook extends from a bottom side of the top cover and towards the middle portion of the main body.

4. The top cover of claim 2, wherein the pair of channels are configured to slide along the pair of slide rails of the cross belt frame to interlock the middle portion of the main body of the top cover with the cross belt frame.

5. The top cover of claim 2, wherein the pair of channels are configured to restrict movement of the top cover in the transverse direction and the vertical direction when interlocked with the pair of slide rails.

6. The top cover of claim 2, wherein the hook is configured to anchor around the at least one protrusion that extends from the cross belt frame to interlock the first end of the top cover with the cross belt frame.

7. The top cover of claim 1, wherein the first end locking unit and the second end locking unit are configured to restrict movement of the top cover in the longitudinal direction and the vertical direction when interlocked with the respective at least one protrusion.

8. The top cover of claim 1, wherein the middle locking unit corresponds to a pair of channels, wherein each channel has a vertically-extending portion and a transverse-extending portion that enable the pair of channels to slide along the pair of slide rails in the vertical direction.

9. The top cover of claim 1, wherein each of the two end portions are constructed to bend at an angle to enable the respective end locking unit to anchor around the respective protrusion that extend from the cross belt frame, wherein the angle defines a range between 30 degrees to 75 degrees.

10. The top cover of claim 1, wherein the top cover is made from polyvinyl chloride (PVC).

11. The top cover of claim 10, wherein the top cover is manufactured with an extrusion process.

12. A method comprising:
bending two end portions of a main body of a top cover, wherein:
the top cover defines a longitudinal direction, a transverse direction, and a vertical direction, and
the top cover comprises:
a main body extending along a plane defined by the longitudinal direction and the transverse direction, the main body having a middle portion and two end portions, wherein the middle portion is positioned between the two end portions;
a middle locking unit extending from a bottom side of the middle portion of the main body;
a first end locking unit extending from one of the two end portions; and
a second end locking unit extending from another one of the two end portions;
sliding the middle locking unit along a pair of slide rails of a cross belt frame;
detachably engaging the first end locking unit with at least one protrusion that extends from the cross belt frame; and
detachably engaging the second end locking unit with at least one other protrusion that extends from the cross belt frame.

13. The method of claim 12, wherein the middle locking unit corresponds to a pair of channels and the first end locking unit and the second end locking unit corresponds to a hook, wherein the hook extends from a bottom side of the top cover and towards the middle portion of the main body.

14. The method of claim 13, wherein the pair of channels are configured to slide along the pair of slide rails of the cross belt frame to interlock the middle portion of the main body of the top cover with the cross belt frame,

15. The method of claim 13, wherein the pair of channels are configured to restrict movement of the top cover in the transverse direction and the vertical direction when interlocked with the pair of slide rails.
